Europäisches Patentamt

European Patent Office

Office européen des brevets

(19)

(11) **EP 0 876 515 B1**

(12) **FASCICULE DE BREVET EUROPEEN**

(45) Date de publication et mention
de la délivrance du brevet:
**18.07.2001 Bulletin 2001/29**

(51) Int Cl.7: **C22C 38/12**, C22C 38/18,
C21D 1/19

(21) Numéro de dépôt: **97900244.1**

(22) Date de dépôt: **08.01.1997**

(86) Numéro de dépôt international:
**PCT/FR97/00027**

(87) Numéro de publication internationale:
**WO 97/26385 (24.07.1997 Gazette 1997/32)**

(54) **FIL-MACHINE ADAPTE AU RENFORCEMENT D'ARTICLES EN MATIERES PLASTIQUES OU EN CAOUTCHOUC**

WALZDRAHT VERWENDBAR ZUR VERSTÄRKUNG VON ERZEUGNISSE AUS PLASTISCHE WERKSTOFFE ODER AUS GUMMI

DRAWING STOCK FOR REINFORCING PLASTIC OR RUBBER ARTICLES

(84) Etats contractants désignés:
**AT BE CH DE DK ES FI FR GB GR IE IT LI LU NL PT SE**

(30) Priorité: **16.01.1996 FR 9600407**

(43) Date de publication de la demande:
**11.11.1998 Bulletin 1998/46**

(73) Titulaire: **ISPAT UNIMETAL**
**57120 Rombas (FR)**

(72) Inventeurs:
• **ARNAUD, Jean-Claude**
**F-63830 Durtol (FR)**
• **DEPRAETERE, Eric**
**F-63260 Thuret (FR)**
• **SERRE, Raoul**
**F-63122 Ceyrat (FR)**
• **FRANCOIS, Marc**
**F-57000 Metz (FR)**

(74) Mandataire: **Ventavoli, Roger**
**Cabinet ROVE Conseils**
**42, rue de Paris**
**BP50229**
**57106 Thionville cedex (FR)**

(56) Documents cités:
**EP-A- 0 058 016** **EP-A- 0 509 407**

• **PATENT ABSTRACTS OF JAPAN vol. 15, no. 398 (C-874), 9 Octobre 1991 & JP 03 162550 A (SUZUKI KINZOKU KOGYO K.K.), 12 Juillet 1991,**
• **PATENT ABSTRACTS OF JAPAN vol. 5, no. 018 (M-053), 3 Février 1981 & JP 55 147416 A (SUMITOMO METAL IND.LTD.)**
• **PATENT ABSTRACTS OF JAPAN vol. 14, no. 356 (C-745), 2 Août 1990 & JP 02 129342 A (KAWASAKI STEEL CORP.), 15 Juillet 1990,**

**Description**

L'invention concerne les fils machine en acier permettant d'obtenir des fils métalliques prêts à l'emploi aptes à être utilisés pour renforcer des articles, en matières plastiques ou en caoutchouc, notamment des tuyaux, des courroies, des nappes, des enveloppes de pneumatiques...

L'expression "fil prêt à l'emploi" est employée ici dans son assertion habituelle dans le domaine de la métallurgie, à savoir que ce fil peut être utilisé, pour l'application prévue, sans devoir être préalablement soumis à un traitement thermique susceptible de modifier sa structure métallurgique, et sans le soumettre à une déformation, par exemple un tréfilage, susceptible de modifier son diamètre.

La demande de brevet internationale WO-A-92/14811 décrit un procédé pour obtenir un fil "prêt à l'emploi" de ce type comportant un substrat en acier dont la structure pondérale comporte plus de 90 % de martensite revenue écrouie, l'acier ayant une teneur en carbone au moins égale à 0,05 % et au plus égale à 0,6 %, ce substrat étant revêtu d'un alliage métallique autre que l'acier, par exemple du laiton. Le procédé pour obtenir ce fil comporte un traitement de trempe sur fil écroui en chauffant le fil au-dessus du point de transformation $AC_3$ pour lui donner une structure d'austénite homogène et en le refroidissant ensuite rapidement, à une vitesse au moins égale à 150°C/seconde, au dessous du point de fin de transformation martensitique. Après ce traitement de trempe, on effectue sur le fil un dépôt d'au moins deux métaux, on chauffe ensuite le fil pour provoquer par diffusion la formation d'un alliage de ces métaux, généralement du laiton, puis on refroidit ensuite le fil et on l'écrouit.

Le procédé décrit dans ce document comporte en particulier les avantages suivants :

- utilisation d'un fil-machine de départ ayant une teneur en carbone inférieure à celle d'un acier perlitique,
- grande souplesse dans le choix des diamètres des fils-machine et des fils prêts à l'emploi ainsi obtenus,
- tréfilage réalisé à partir du fil-machine avec des vitesses élevées et avec des casses réduites,
- le traitement de diffusion est réalisé en même temps que le revenu du fil, ce qui limite les coûts de fabrication.

Cependant ce procédé connu présente les inconvénients suivants :

a) La température de revenu nécessaire pour obtenir une bonne diffusion du revêtement ne correspond pas toujours de façon précise à celle nécessaire pour obtenir une résistance mécanique suffisante avant tréfilage.

b) Les propriétés mécaniques obtenues après le revenu varient rapidement avec les variations de température introduites par suite de la dispersion inévitable des systèmes de chauffage.

c) La trempabilité de l'acier s'avère insuffisante, c'est-à-dire qu'il est nécessaire de refroidir à une vitesse élevée afin d'obtenir une structure totalement, ou pratiquement totalement, martensitique. Si la vitesse de refroidissement est trop faible, d'autres phases que la martensite peuvent apparaître, comme par exemple la bainite. Cette vitesse élevée de trempe est une contrainte importante de fabrication.

Il est connu de façon générale que, dans les procédés de réalisation de pièces en aciers martensitiques, l'addition d'un élément d'alliage, comme le vanadium ou le chrome, permet d'améliorer la trempabilité et la résistance par suite de la précipitation de carbonitrures et/ou de carbures de vanadium ou de chrome lors du revenu. Cependant les durées habituelles de traitement, afin de permettre la précipitation, sont de plusieurs dizaines de minutes, voire de quelques heures.

La demanderesse a constaté de façon totalement inattendue que la précipitation, sous forme de carbonitrures et/ou carbures, d'un élément d'alliage comme le vanadium, le molybdène ou le chrome pouvait se faire rapidement dans des fils de diamètre inférieur à 3 mm. Or, cette précipitation lors du revenu permet d'éviter les inconvénients précités a) et b), et la présence de ces éléments d'alliage lors de la trempe permet d'éviter l'inconvénient c) précité en rendant possible une trempe plus douce.

Ainsi, l'invention a pour objet un fil-machine tel que défini à la revendication 1.

Le fil métallique "prêt à l'emploi" obtenu à partir du fil-machine conforme à l'invention présente les caractéristiques suivantes :

a) il est constitué par un acier microallié ayant une teneur en carbone au moins égale à 0,2 % et au plus égale à 0,6 % en poids. Cet acier comporte en outre au moins un élément d'alliage choisi dans le groupe formé par le vanadium, le molybdène et le chrome, à raison d'au moins 0,05 % et au plus 0,5 % en poids de l'élément d'alliage ou de l'ensemble des éléments d'alliage et optionellement entre 0,3 et 0,6 % de manganèse, entre 0,1 et 0,3 % de silicium, au plus 0,02 % de phosphore et au plus 0,02 % de soufre, le reste étant du fer avec les résiduels habituels ;

b) cet acier présente une structure constituée pratiquement en totalité de martensite revenue écrouie ;

c) le diamètre du fil est au moins égal à 0,10 mm et au plus égal à 0,50 mm ;

d) la résistance à la rupture du fil est au moins égale à 2800 MPa.

De préférence, le fil "prêt à l'emploi" comporte un revêtement en alliage métallique autre que l'acier, disposé sur un substrat en acier microallié ayant les caractéristiques précitées.

Un procédé pour produire un tel fil "prêt à l'emploi" comprend les opérations suivantes :

a) on part du fil-machine conforme à l'invention ;

b) on déforme ce fil-machine de telle sorte que le diamètre du fil après cette déformation soit inférieur à 3 mm ;

c) on arrête la déformation et on effectue un traitement thermique de trempe sur le fil déformé, ce traitement consistant à chauffer le fil au-dessus du point de transformation $AC_3$ pour lui donner une structure d'austénite homogène, puis à le refroidir au moins pratiquement jusqu'au point de fin de transformation martensitique $M_F$, la vitesse de ce refroidissement étant au moins égale à 60°C/s de façon à obtenir une structure constituée pratiquement que de martensite ;

d) on chauffe ensuite le fil à une température, dite "température de revenu", au moins égale à 250°C et au plus égale à 700°C, de façon à provoquer la précipitation d'au moins un carbonitrure et/ou carbure de l'élément d'alliage, ou d'au moins un élément d'alliage, et la formation d'une structure constituée pratiquement en totalité de martensite revenue ;

e) on refroidit ensuite le fil au moins pratiquement jusqu'au point de fin de transformation martensitique $M_F$ ;

f) on déforme ensuite le fil, le taux de déformation $\varepsilon$ étant au moins égal à 1.

De préférence, après l'étape c) précédemment définie, on effectue sur le fil un dépôt d'au moins deux métaux susceptibles de former par diffusion un alliage, l'acier microallié précité servant ainsi de substrat et, lors de l'étape d) précédemment définie, le chauffage à la température de revenu sert également à provoquer la formation, par diffusion, d'un alliage de ces métaux, par exemple du laiton.

Les fils "prêts à l'emploi" ainsi obtenus peuvent être utilisés tels quels. On peut également former avec eux des assemblages, par exemple des torons, des câbles à fils, notamment des câbles à couches de fils ou des câbles constitués de torons de fils.

Ces fils "prêts à l'emploi", ou les assemblages de tels fils peuvent être utilisés pour renforcer des articles qui sont par exemple des tuyaux, des courroies, des nappes, des enveloppes de pneumatiques.

L'invention sera aisément comprise à l'aide des exemples de réalisation qui suivent.

## I. DEFINITIONS ET TESTS

**1. Mesures dynamométriques :** Ces mesures de résistance à la rupture sont effectuées en traction selon la méthode décrite dans la norme française AFNOR NF A 03-151 de juin 1978.

**2. Déformation :** par définition, la déformation est exprimée par son taux de déformation $\varepsilon$, et qui est donné par la formule :

$$\varepsilon = Ln\ (S_o/S_f)$$

Ln étant le logarithme népérien, $S_o$ étant la section initiale du fil avant cette déformation et $S_f$ étant la section du fil après cette déformation.

**3. Structure des aciers :** la structure des aciers est déterminée visuellement avec un microscope optique avec un grossissement de 400. La préparation des échantillons par attaque chimique, ainsi que l'examen des structures sont effectuées conformément à la référence suivante : De Ferri Metallographica vol. n° II, A. Schrader, A. Rose, Edition Verlay Stahleisen GmbH. Düsseldorf.

4. Détermination du point $M_F$ : le point de fin de transformation martensitique $M_F$ est déterminé conformément à la référence suivante : Ferrous Physical Metallurgy, A. Kumar Sinhu, Edition Butterworths 1989. On utilise dans ce but la relation :

$$M_F = M_S - 215°C$$

avec : $M_S$ = 539 - 423 $\times$ C% - 30,4 x Mn% - 17,7 x Ni% - 12,1 x Cr% - 7,5 x Mo% - 7,5 $\times$ Si% + 10 x Co%,

Dans laquelle C%, Mn%, Ni%, Cr%, Mo%, Si et Co représentent les pourcentages pondéraux des corps chimiques dont ils sont les symboles.

On admet que le vanadium peut être utilisé dans cette formule en ayant le même effet que le molybdène (alors que la référence précitée représentative de l'état antérieur de la technique ne mentionne pas le vanadium).

**5. Dureté Vickers :** cette dureté, ainsi que la méthode pour la déterminer, sont décrites dans la norme française AFNOR A 03-154.

**6. Taux de diffusion du laiton :** ce taux est déterminé par diffraction des rayons X avec une anode au cobalt (30 kV, 30 mA). On évalue l'aire des pics des phases $\alpha$ et $\beta$ (le cuivre pur étant déterminé en étant confondu avec la phase $\beta$), après déconvolution des deux pics. Le taux de diffusion Td est donné par la formule : Td = [aire du pic $\alpha$] / [aire du pic $\alpha$ + aire du pic $\beta$]

Le pic $\alpha$ correspond environ à l'angle de 50° et le pic $\beta$ correspond environ à l'angle 51°.

## II) EXEMPLES

On utilise quatre fils machine de diamètre 5,5 mm référencés A, B, C et D, les fils machine C et D étant conformes à l'invention. La composition pondérale de l'acier de ces fils est donnée dans le tableau 1 qui suit :

Tableau 1

|  | C% | Mn% | Si% | V% | S% | P% |
|---|---|---|---|---|---|---|
| Fils A, B | 0,427 | 0,619 | 0,222 | 0 | < 0,003 | < 0,003 |
| Fil C | 0,428 | 0,621 | 0,224 | 0,103 | < 0,003 | < 0,003 |
| Fil D | 0,419 | 0,611 | 0,222 | 0,156 | < 0,003 | < 0,003 |

Les autres éléments de ces fils machine sont à l'état d'impuretés inévitables et dans des quantités négligeables.
Les valeurs de MF et de $AC_3$ pour ces fils machines sont données dans le tableau 2.

Tableau 2

|  | $M_F$ | $AC_3$ |
|---|---|---|
| **FILS A et B** | 123°C | 769°C |
| **FIL C** | 122°C | 779°C |
| **FIL D** | 125°C | 786°C |

Les valeurs de $AC_3$ en degrés°Celsius sont données par la formule suivante de Andrews (JISI, juillet 1967, pages 721-727) :

$$AC_3 = 910\text{-}203' \ C\% - 15,2 \ Ni\% + 44,7 \ Si\% + 104 \ V\% + 31,5 \ Mo\%$$

$$- 30.Mn + 13,1 \ W\% - 20 \ Cu\% + 700 \ P\% + 400 \ Al\% + 120 \ As\%$$

$$+ 400 \ Ti\%$$

dans laquelle C%, Ni%, Si%, V%, Mo%, Mn%, W%, Cu%, P%, Al%, As% et Ti% représentent les pourcentages en poids des corps chimiques dont ils sont les symboles.
Les fils A et B sont donc identiques et non microalliés, les fils C et D étant microalliés et différents entre eux.
On tréfile ces fils machine jusqu'à un diamètre de 1,3 mm, le taux de déformation $\in$ étant ainsi égal à 2,88.
On effectue ensuite sur ces quatre fils un traitement de trempe de la façon suivante :

- chauffage à 1000°C maintenu pendant 5 secondes ;
- refroidissement rapide jusqu'à la température ambiante (environ 20°%).

Les conditions du refroidissement de trempe sont les suivantes :

- Fils A, C et D : vitesse de 130°C/sec. en utilisant comme gaz de trempe un mélange d'hydrogène et d'azote (75 % en volume d'hydrogène, 25 % en volume d'azote).
- Fil B : vitesse de 180°C/sec. en utilisant de l'hydrogène pur.

On mesure la dureté Vickers sur chacun des fils obtenus référencés A1, B1, C1 et D1, les lettres A, B, C et D identifiant chacune le fil-machine de départ précité. Les valeurs obtenues sont indiquées dans le tableau 3.

Tableau 3

| Fil A1 | Fil B1 | Fil C1 | Fil D1 |
|--------|--------|--------|--------|
| 650    | 685    | 690    | 700    |

Le fil A1 est inutilisable par suite de sa dureté trop basse, ce qui est dû au fait que sa structure n'est pas constituée quasi uniquement de martensite, mais contient à la fois de la martensite et de la bainite.

Les fils B1, C1 et D1 sont constitués chacun pratiquement uniquement de martensite et leur dureté Vickers est satisfaisante.

Les fils C1 et D1, en acier microallié, sont obtenus avec une trempe facile à effectuer (vitesse relativement basse, avec un mélange gazeux peu coûteux et non dangereux), alors que le fil B1 est obtenu avec un procédé difficile et coûteux (vitesse de trempe élevée, en utilisant de l'hydrogène pur), ce procédé permettant d'obtenir une dureté suffisante mais qui est cependant inférieure à celle des fils microalliés C1 et D1.

On constate donc que le vanadium permet d'améliorer la trempabilité de l'acier, c'est-à-dire la formation d'une phase unique de martensite lors de la trempe.

On dépose ensuite de façon connue sur les trois fils B1, C1 et D1, par électrolyse par exemple, une couche de cuivre, puis une couche de zinc. La quantité totale des deux métaux déposés est de 390 g pour 100 g de chacun des fils, avec 64 % en poids de cuivre et 36 % en poids de zinc. On obtient ainsi les trois fils B2, C2 et D2.

On chauffe ensuite par effet Joule le fil témoin B2, pendant 5 secondes chaque fois, à trois températures de revenu Tr (525°C, 590°C, 670°C), puis on refroidit à la température ambiante (environ 20°C), afin d'évaluer l'effet de ce traitement thermique sur la résistance à la rupture Rm et sur le taux de diffusion Td du laiton, formé par l'alliage du cuivre et du zinc, pour le fil ainsi obtenu B3, dans chaque cas.

Les résultats sont donnés dans le tableau 4.

Tableau 4

| Tr    | $R_m$(MPa) | $T_d$ |
|-------|-----------|-------|
| 525°C | 1 239     | 0,82  |
| 590°C | 1 120     | 0,92  |
| 670°C | 964       | 0,95  |

On remarque que, pour la température de 525°C, le taux de diffusion $T_d$ est insuffisant (inférieur à 0,85), mais que la résistance à la rupture est plus élevée que pour les autres températures. Une très bonne diffusion du laiton est obtenue pour le traitement à 670°C (diffusion supérieure à 0,85), mais la résistance à la rupture est notablement plus faible qu'à 525°C et n'est pas suffisante pour permettre d'obtenir par tréfilage ultérieur une résistance à la rupture élevée. La résistance à la rupture est un peu supérieure pour le traitement à 590°C que celle obtenue à 670°C, avec une diffusion légèrement inférieure du laiton, bien que satisfaisante, mais cette résistance est elle aussi insuffisante pour garantir une résistance élevée après tréfilage.

On constate d'autre part que le taux de diffusion augmente lorsque la résistance à la rupture diminue, ce qui est un inconvénient car, dans la pratique, le taux de diffusion doit être d'autant plus élevé que la résistance à la rupture est plus élevée, pour permettre une déformation ultérieure (par exemple par tréfilage) sans rupture du fil. On constate donc ici au contraire que l'aptitude à la déformation baisse lorsque la résistance à la rupture augmente, ce qui va à l'encontre du but recherché.

Les deux fils C2 et D2, contenant du vanadium, sont chauffés à 590°C pendant seulement 5 secondes pour effectuer un revenu, puis refroidis à la température ambiante (environ 20°C). On détermine ensuite le taux de diffusion Td du laiton et la résistance à la rupture Rm des fils ainsi obtenus C3 et D3. Les résultats sont donnés dans le tableau 5.

Tableau 5

|  | $R_m$(MPa) | $T_d$ |
|---|---|---|
| Fil C3 | 1229 | 0,92 |
| Fil D3 | 1261 | 0,92 |

On constate que, dans les deux cas, le taux de diffusion du laiton est supérieur à 0,9, c'est-à-dire que la diffusion est très bonne, et que la résistance à la rupture est également très bonne, très supérieure à celle obtenue pour le fil témoin B3 lorsque la diffusion du laiton est supérieure à 0,9. La présence du vanadium permet donc, de façon inattendue, d'avoir à la fois une bonne diffusion du laiton et une bonne résistance à la rupture grâce à la formation de fins précipités de carbonitrure et/ou carbure de vanadium, qui était en solution après la période de trempe, et ceci malgré le temps très court de revenu.

Il est connu que le vanadium précipite dans les aciers pour des temps de revenu très longs, allant d'environ dix minute à plusieurs heures, mais il est surprenant de constater une telle précipitation pour des temps si courts, inférieurs à la minute, par exemple inférieurs à 10 secondes.

On déforme ensuite par tréfilage les fils B3, C3 et D3 pour obtenir un diamètre final d'environ 0,18 mm, ce qui correspond à un taux de déformation ∈ de 4, et on obtient ainsi les fils B4, C4 et D4 prêts à l'emploi, sur lesquels on détermine la résistance à la rupture Rm. Les résultats sont donnés dans le tableau 6.

Tableau 6

|  | Tr | $R_m$(MPa) | $T_d$ |
|---|---|---|---|
| **B4** | 525°C | 2960 | 0,82 |
| **B4** | 590°C | 2820 | 0,92 |
| **B4** | 670°C | 2530 | 0,95 |
| **C4** | 590°C | 2945 | 0,92 |
| **D4** | 590°C | 2983 | 0,92 |

Les valeurs de Tr sont celles indiquées précédemment pour le revenu et les valeurs de Td sont celles indiquées précédemment et qui ont été déterminées après l'opération de laitonnage, avant tréfilage, les valeurs de Td n'étant pratiquement pas modifiées lors du tréfilage.

On constate que les fils C4 et D4 se caractérisent à la fois par un bon taux de diffusion du laiton (supérieur à 0,9) et par une excellente résistance à la rupture (supérieure à 2900 MPa). Les fils témoins B4 ont des valeurs de résistance à la rupture notablement inférieures à celle des fils C4 et D4, sauf pour le fil B4 initialement traité à une température de revenu de 525°C, mais alors le taux de diffusion du laiton est insuffisant (inférieur à 0,85), c'est-à-dire que le tréfilage est délicat à effectuer et conduit à des ruptures fréquentes du fil lors de sa déformation, ce qui rend l'obtention du fil beaucoup plus difficile que dans le cas des fils C4 et D4.

Les exemples précédents utilisaient un acier au vanadium, mais l'invention s'applique aussi aux cas où l'on utilise au moins un des métaux molybdène et chrome et aux cas où l'on utilise au moins deux des métaux choisis dans le groupe constitué par le vanadium, le molybdène et le chrome.

Le fil-machine conforme à l'invention est élaboré de la manière habituelle pour un fil machine destiné à être transformé en fil fin "prêt à l'emploi" pour renforcer les enveloppes de pneumatiques.

On part d'un bain d'acier en fusion ayant la composition indiquée pour le fil-machine conforme à l'invention. Cet acier est élaboré d'abord au four électrique ou au convertisseur à l'oxygène, puis désoxydé en poche à l'aide d'un oxydant, comme le silicium, qui ne risque pas de produire des inclusions d'alumine. Le vanadium est ensuite introduit en poche sous forme de morceaux en vrac de ferro-vanadium par addition au bain métallique.

Ceci reste valable si l'élément d'alliage doit être du chrome ou du molybdène.

Une fois prêt, le bain d'acier est coulé en continu sous forme de billettes ou de blooms. Ces demi-produits sont ensuite laminés de façon classique en fil-machine ayant un diamètre de 5,5 mm, d'abord en billettes, s'il s'agit de blooms, ou directement en fil-machine s'il s'agit de billettes.

De préférence, on a au moins une des caractéristiques suivantes pour le fil-machine conforme à l'invention :

-	la teneur en carbone est au moins égale à 0,3 % et au plus égale à 0,5 % (% en poids), cette teneur étant avantageusement de 0,4 % environ ;
-	l'acier vérifie les relations suivantes : 0,3 % ≤ Mn ≤ 0,6 % ; 0,1 % ≤ Si ≤ 0,3 % ; P ≤ 0,02 % ; S ≤ 0,02 % (% en poids) ;
-	l'élément d'alliage, ou l'ensemble des éléments d'alliage, représente au plus 0,3 % en poids de l'acier ;

De préférence, on a les caractéristiques suivantes pour le fil "prêt à l'emploi" obtenu avec le fil-machine conforme à l'invention :

- la résistance à la rupture est au moins égale à 2900 MPa ;
- le diamètre est au moins égal à 0,15 mm et au plus égal à 0,40 mm.

De préférence, on a au moins une des caractéristiques suivantes pour le procédé de transformation du fil-machine conforme à l'invention, de façon à obtenir le fil "prêt à l'emploi" pré-mentionné :

- la teneur en carbone de l'acier du fil machine utilisé est au moins égale à 0,3 % et au plus égale à 0,5 % (% en poids), cette teneur étant par exemple environ 0,4 % ;
- l'acier du fil machine utilisé vérifie les relations suivantes : $0,3 \% \leq Mn \leq 0,6 \%$ ; $0,1 \% \leq Si \leq 0,3 \%$ ; $P \leq 0,02 \%$ ; $S \leq 0,02 \%$ (% en poids) ;
- l'élément d'alliage ou l'ensemble des éléments d'alliage de l'acier du fil machine utilisé représente au plus 0,3 % en poids de cet acier ;
- la vitesse de refroidissement lors de la trempe est inférieure à 150°C/seconde ;
- la température de revenu est au moins égale à 400°C et au plus égale à 650°C ;
- on refroidit le fil à la température ambiante après l'avoir porté à la température de revenu ;
- le taux de déformation $\in$ après le traitement de revenu est au moins égal à 3.

La déformation du fil dans les exemples précédents était réalisée par tréfilage, mais d'autres techniques sont possibles, par exemple un laminage, associé éventuellement à un tréfilage, pour au moins une des opérations de déformation.

Bien entendu, l'invention n'est pas limitée aux exemples de réalisation précédemment décrits. C'est ainsi par exemple que le fil-machine conforme à l'invention peut servir à la réalisation d'un fil "prêt à l'emploi" dont le substrat en acier est revêtu d'un alliage autre que le laiton, cet alliage étant obtenu avec deux métaux, ou plus de deux métaux, par exemple les alliages ternaires [cuivre - zinc - nickel], [cuivre - zinc - cobalt], [cuivre - zinc - étain], l'essentiel étant que les métaux utilisés soient susceptibles de former un alliage, par diffusion, sans devoir outrepasser la température de recuit.

## Revendications

1. Fil-machine en acier microallié pour renforcement d'articles en matières plastiques ou en caoutchouc caractérisé en ce que ledit acier comporte une teneur pondérale comprise entre 0,2 et 0,6 % en carbone, entre globalement 0,05 et 0,5 % en éléments d'alliage choisis dans le groupe formé par le vanadium, le molybdène et le chrome, et, optionnellement, entre 0,3 et 0,6% de manganèse, entre 0,1 et 0,3% de silicium, au plus 0,02% de phosphore et au plus 0,02% de soufre, le reste étant du fer avec les résiduels habituels, et en ce qu'il se présente sous la forme d'un fil-machine de diamètre inférieur à 3 mm avant traitement thermique et déformation finale qui lui conféreront une microstructure de type martensite revenue écrouie sous forme d'un fil fin "prêt à l'emploi" de 0,10 mm à 0,50 mm de diamètre.

2. Fil-machine selon la revendication 1, caractérisé en ce que la teneur pondérale en carbone est comprise entre 0,3 et 0,5 %.

3. Fil-machine selon la revendication 2, caractérisé en ce que la teneur en carbone est environ 0,4 % en poids.

4. Fil-machine selon l'une quelconque des revendications 1 à 3, caractérisé en ce que l'élément d'alliage, ou l'ensemble des éléments d'alliage, représente au plus 0,3 % en poids de l'acier dont il est constitué.

## Patentansprüche

1. Walzdraht aus mikrolegiertem Stahl zur Verstärkung von Erzeugnissen aus plastischen Werkstoffen oder aus Gummi, dadurch gekennzeichnet, dass der genannte Stahl zwischen 0,2 und 0,6 Gew.% Kohlenstoff, insgesamt zwischen 0,05 und 0,5 Gew.% Legierungsmetalle, gewählt aus der Gruppe Vanadium, Molybdän und Chrom, und optional zwischen 0,3 und 0,6 Gew.% Mangan, zwischen 0,1 und 0,3 Gew.% Silizium, höchstens 0,02 Gew.% Phosphor und höchstens 0,02 Gew.% Schwefel enthält, wobei der Rest Eisen mit den üblichen Rückständen ist, und dass er vorliegt in der Form von Walzdraht mit einem Durchmesser von unter 3 mm vor einer Wärmebehandlung und einer endgültigen Verformung, die ihm eine Mikrostruktur vom Typ angelassenem, kaltverfestigtem Martensit in der Form eines "verwendungsfertigen" Drahtes mit einem Durchmesser von 0,10 mm bis 0,50 mm verleihen.

2.  Walzdraht nach Anspruch 1, dadurch gekennzeichnet, dass der Kohlenstoffgehalt zwischen 0,3 und 0,5 Gew.% beträgt.

3.  Walzdraht nach Anspruch 2, dadurch gekennzeichnet, dass der Kohlenstoffgehalt etwa 0,4 Gew.% beträgt.

4.  Walzdraht nach einem der Ansprüche 1 bis 3, dadurch gekennzeichnet, dass das Legierungselement oder die Gesamtheit der Legierungselemente höchstens 0,3 Gew.% des Stahls darstellt, aus dem er besteht.

**Claims**

1.  Wire rod made of microalloyed steel for the reinforcement of plastic or rubber articles, characterized in that the said steel has a carbon content of between 0.2 and 0.6% by weight and contains between generally 0.05 and 0.5% by weight of alloying elements selected from the group formed by vanadium, molybdenum and chromium, and, optionally, between 0.3 and 0.6% by weight of manganese, between 0.1 and 0.3% by weight of silicon, at most 0.02% by weight of phosphorus and at most 0.02% by weight of sulphur, the balance being iron with the usual residual elements, and in that it is in the form of a wire rod having a diameter of less than 3 mm before heat treatment and final deformation which will give it a work-hardened annealed martensite-type microstructure in the form of a "ready-to-use" wire from 0.10 mm to 0.50 mm in diameter.

2.  Wire rod according to Claim 1, characterized in that the carbon content is between 0.3 and 0.5% by weight.

3.  Wire rod according to Claim 2, characterized in that the carbon content is about 0.4% by weight.

4.  Wire rod according to any one of Claims 1 to 3, characterized in that the alloying element, or the combination of alloying elements, represents at most 0.3% by weight of the steel of which it is composed.